# EUROPÄISCHE PATENTSCHRIFT

(11) **EP 3 415 055 B1**
(45) Veröffentlichungstag und Bekanntmachung des Hinweises auf die Patenterteilung: **29.07.2020**
(21) Anmeldenummer: 18176894.6
(22) Anmeldetag: 11.06.2018
(51) Int. Cl.: A47J 31/52, A47J 31/54

(54) **GETRÄNKEZUBEREITUNGSAUTOMAT MIT RESTZEITANZEIGE UND VERFAHREN ZU DESSEN BETRIEB**
DRINK PREPARATION DEVICE WITH REMAINING TIME DISPLAY AND METHOD FOR ITS OPERATION
DISTRIBUTEUR AUTOMATIQUE DE BOISSONS À AFFICHAGE DE TEMPS RESTANT ET PROCÉDÉ DE FONCTIONNEMENT D'UN TEL DISTRIBUTEUR AUTOMATIQUE DE BOISSONS

(30) Priorität: 12.06.2017 DE 102017112899
(43) Veröffentlichungstag der Anmeldung: 19.12.2018
(73) Patentinhaber: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Dr. Sascha, 48607 Ochtrup (DE); ZILS, Jürgen, 51399 Burscheid (DE)
(74) Vertreter: Cohausz & Florack

(56) Entgegenhaltungen:
- FR-A1- 2 858 745
- GB-A- 2 409 197
- US-A1- 2010 305 903

## Beschreibung

Die Erfindung betrifft einen Getränkezubereitungsautomaten, eingerichtet zur automatischen Zubereitung von Getränken in einer Brühkammer, mit einer Nutzerschnittstelle zur Ausgabe einer Nutzerinformation und mit einer Steuereinrichtung, die dazu eingerichtet ist, die Durchführung eines Brühvorgangs zur automatischen Zubereitung eines Getränks entsprechend für den Brühvorgang eingestellter Brühparameter zu steuern. Weiterhin betrifft die Erfindung ein Verfahren zum Betrieb eines Getränkezubereitungsautomaten, insbesondere des zuvor beschriebenen Getränkezubereitungsautomaten.

Bei dem Getränkeautomaten kann es sich beispielsweise um einen Kaffeeautomaten handeln, der zur automatischen Zubereitung von Kaffeegetränken in einer Brühkammer eingerichtet ist.

Insbesondere kann es sich bei dem Getränkeautomaten auch um einen Teeautomaten handeln, der zur automatischen Zubereitung von Teegetränken in einer Brühkammer eingerichtet ist.

Während Kaffeeautomaten zum automatischen Zubereiten von Kaffeegetränken seit langem bekannt sind, sind erst in jüngerer Zeit Teeautomaten entwickelt worden, die speziell zur automatischen Zubereitung von Teegetränken vorgesehen sind.

Bei der Zubereitung von Teegetränken in einer Brühkammer werden Teeblätter in der Brühkammer mit heißem Wasser in Kontakt gebracht und dort für eine vorgegebene Brühzeit belassen, sodass Farb- und Aromastoffe aus den Teeblättern in das Wasser gelangen können, das dadurch zum fertigen Teegetränk wird. Abhängig von der verwendeten Teesorte und den Nutzerwünschen sind unterschiedliche Brühdauern, Brühtemperaturen und Wassermengen erforderlich, um eine optimale bzw. gewünschte Beschaffenheit des zubereiteten Teegetränkes zu erreichen. Weiterhin werden manche Teesorten wie zum Beispiel grüne Tees mit speziellen Brühprogrammen zubereitet, bei denen die Teeblätter zunächst in einem ersten Aufguss, einem sogenannten Pre-Wash-Aufguss, vorgewaschen werden, bevor sie dann einen regulären Aufguss zur Zubereitung des zu konsumierenden Teegetränkes durchlaufen. Die Zubereitung von Teegetränken ist insoweit hinsichtlich der Variabilität der Brühparameter und des Brühablaufs komplexer als die Zubereitung von Kaffeegetränken.

Wenn Nutzer über eine Nutzerschnittstelle eines Kaffee- oder Teeautomaten einen Brühvorgang starten, haben sie in der Regel das Bedürfnis zu wissen, wie lange es noch bis zur Fertigstellung des angeforderten Getränks dauert.

Einige Kaffeeautomaten aus dem Stand der Technik informieren den Nutzer über einen Fortschrittsbalken auf einem Bildschirm des Automaten über den Stand eines laufenden Brühverfahrens. Auf diese Weise kann der Nutzer während des Brühvorgangs abschätzen, in welchem Stadium sich der laufende Brühvorgang befindet.

Die Aktualisierung des Brühvorgangs erfolgt dabei typischerweise sprunghaft, wobei der Fortschrittsbalken jeweils aktualisiert wird, wenn eine bestimmte Phase des Brühvorgangs abgeschlossen ist, beispielsweise wenn das Wasser für den Brühvorgang die gewünschte Temperatur erreicht hat, wenn die vorgegebene Wassermenge vollständig in die Brühkammer eingeleitet wurde etc.

Diese Fortschrittsbalken haben jedoch den Nachteil, dass der Nutzer die genaue Dauer des Brühvorgangs nicht erkennen kann. Weiterhin hat er keine Möglichkeit zu Beginn des Brühvorgangs dessen Dauer zu erkennen, sondern ist darauf angewiesen, den Fortschrittsbalken während des Verlaufs des Brühvorgangs zu beobachten.

In der FR 2 858 745 wird ein Heißgetränkezubereitungsgerät mit einem Durchlauferhitzer mit zwei unabhängig voneinander schaltbaren Heizelementen beschrieben, wobei das die Heizelemente abhängig von einer auswählbaren Brühzeit geschaltet werden.

Vor diesem Hintergrund liegt der vorliegenden Erfindung die Aufgabe zugrunde, einen Getränkezubereitungsautomaten, insbesondere einen Teeautomaten, und ein Verfahren zu dessen Betrieb zur Verfügung zu stellen, die gegenüber dem Stand der Technik eine verbesserte Bedienerfreundlichkeit aufweisen.

Diese Aufgabe wird bei einem Getränkezubereitungsautomaten, eingerichtet zur automatischen Zubereitung von Getränken in einer Brühkammer, mit einer Nutzerschnittstelle zur Ausgabe einer Nutzerinformation und mit einer Steuereinrichtung, die dazu eingerichtet ist, die Durchführung eines Brühvorgangs zur automatischen Zubereitung eines Getränkes entsprechend für den Brühvorgang eingestellter Brühparameter zu steuern, erfindungsgemäß dadurch gelöst, dass die Steuereinrichtung dazu eingerichtet ist, einen Wert für die Restzeit des Brühvorgangs abhängig von mindestens einem der für den Brühvorgang eingestellten Brühparameter zu berechnen und die Ausgabe einer von dem berechneten Wert für die Restzeit abhängigen Nutzerinformation über die Nutzerschnittstelle zu bewirken.

Weiterhin wird die oben genannte Aufgabe gelöst durch ein Verfahren zum Betrieb eines Getränkezubereitungsautomaten, insbesondere des zuvor beschriebenen Getränkezubereitungsautomaten, bei dem ein Brühvorgang entsprechend für den Brühvorgang eingestellter Brühparameter durchgeführt wird, bei dem abhängig von mindestens einem für den Brühvorgang eingestellten Brühparameter ein Wert für die Restzeit des Brühvorgangs berechnet wird und bei dem eine von dem berechneten Wert für die Restzeit abhängige Nutzerinformation über eine Nutzerschnittstelle des Getränkezubereitungsautomaten ausgegeben wird.

Durch die tatsächliche Berechnung der Restzeit eines Brühvorgangs und die Ausgabe einer entsprechenden Nutzerinformation kann der Nutzer auf diese Weise besser über die tatsächliche Restdauer des Brühvorgangs informiert werden. Beispielsweise kann die Steuereinrichtung dazu eingerichtet sein, auf einem Bildschirm des Getränkezubereitungsautomaten die tatsächliche Restzeit des Brühvorgangs in Sekunden anzuzeigen, so dass der Nutzer diese Restzeit zur Kenntnis nehmen und die ihm verbleibende Zeit bis zum Ende des Brühvorgangs anders nutzen kann. Auf diese Weise wird der Bedienkomfort des Getränkezubereitungsautomaten erhöht.

Vorzugsweise handelt es sich bei dem Getränkezubereitungsautomaten um einen Teeautomaten, der zur automatischen Zubereitung von Teegetränken in einer Brühkammer eingerichtet ist. Abhängig von der verwendeten Teesorte und den Trinkgewohnheiten des Nutzers können die Brühparameter zur Zubereitung eines Teegetränks und dadurch auch die Restzeit bis zum Ende eines jeweiligen Brühvorgangs stark variieren. Daher ist die durch den beschriebenen Teeautomaten und das beschriebene Verfahren erreichte Genauigkeitsverbesserung bei der angezeigten Restzeit besonders für Teeautomaten vorteilhaft.

Der Getränkezubereitungsautomat ist zur automatischen Zubereitung von Getränken in einer Brühkammer eingerichtet. Zu diesem Zweck weist der Getränkezubereitungsautomat insbesondere eine Brühkammer und eine Steuereinrichtung auf, die die automatische Zubereitung eines Getränks in der Brühkammer steuert. Die Steuereinrichtung kann beispielsweise einen Mikroprozessor und einen damit verbundenen Speicher umfassen, wobei auf dem Speicher Befehle gespeichert sind, deren Ausführung auf dem Mikroprozessor die Steuerung des Getränkezubereitungsautomaten veranlassen.

Der Getränkezubereitungsautomat weist zudem eine Nutzerschnittstelle zur Ausgabe einer Nutzerinformation auf. Bei der Nutzerschnittstelle kann es sich beispielsweise um einen Bildschirm handeln. Die Nutzerschnittstelle kann auch als Ein- und Ausgabeschnittstelle ausgebildet sein, beispielsweise als Touchscreen.

Darüber hinaus weist der Getränkezubereitungsautomat noch weitere Komponenten auf, die für die automatische Zubereitung von Getränken, insbesondere Teegetränken, erforderlich sind. Insbesondere kann der Getränkezubereitungsautomat eine oder mehrere der folgenden Komponenten aufweisen: eine Heißwasserversorgung, eine Einfüllöffnung für eine Zutat, insbesondere für lose Teeblätter, einen Siebeinsatz und eine Verfahreinrichtung zum Bewegen des Siebeinsatzes in der Brühkammer, eine Ausgabeeinrichtung zur Ausgabe des fertigen Getränks, insbesondere Teegetränks, aus der Brühkammer.

Die Steuereinrichtung des Getränkezubereitungsautomaten ist dazu eingerichtet, die Durchführung eines Brühvorgangs zur automatischen Zubereitung eines Getränkes entsprechend für den Brühvorgang eingestellter Brühparameter zu steuern. Der Brühvorgang umfasst insbesondere die Zurverfügungstellung von erwärmtem Wasser, das Fördern des erwärmten Wassers in die Brühkammer und die Verweilzeit der Zutat, insbesondere des Tees bzw. der Teeblätter, im Rahmen des Ziehvorgangs im erwärmten Wasser in der Brühkammer. Die Steuereinrichtung ist insbesondere dazu eingerichtet, die einzelnen zur Zubereitung eines Getränkes erforderlichen Komponenten des Getränkezubereitungsautomaten derart anzusteuern, dass diese die Durchführung des Brühvorgangs mit den eingestellten Brühparametern bewirken.

Bei den eingestellten Brühparametern handelt es sich vorzugsweise um Brühparameter, die speziell für den jeweiligen Brühvorgang eingestellt werden. Als Brühparameter kommen insbesondere die Brühdauer, die Brühtemperatur und/oder die Wassermenge in Betracht. Weiterhin kommen als Brühparameter auch Informationen über ein durchzuführendes Brühprogramm in Betracht, beispielsweise ob und mit welchen Parametern ein sogenannter Pre-Wash-Aufguss vor dem eigentlichen Aufguss zu erfolgen hat.

Die Brühparameter können von der Steuereinrichtung aus einer entsprechenden Nutzereingabe über eine Nutzerschnittstelle des Getränkezubereitungsautomaten empfangen werden. Die Steuereinrichtung kann die Brühparameter zumindest teilweise automatisch einstellen, beispielsweise indem sie für eine bestimmte Zutatensorte und/oder Zutatenmenge, insbesondere Teesorte und/oder Teemenge, die Brühparameter aus einer in einem mit der Steuereinrichtung verbundenen Speicher abgelegten Datenbank abruft.

Die Steuereinrichtung ist dazu eingerichtet, einen Wert für die Restzeit des Brühvorgangs abhängig von mindestens einem der für den Brühvorgang eingestellten Brühparameter zu berechnen. Der Wert für die Restzeit wird vorzugsweise individuell für den Brühvorgang berechnet, so dass eine Berücksichtigung der Brühparameter des Brühvorgangs möglich ist und die Restzeit für den konkreten Brühvorgang bestimmt werden kann. Der Wert für die Restzeit wird zweckmäßigerweise abhängig von mindestens einem der Brühparameter berechnet. Er kann gemäß einer Ausführungsform abhängig von mehreren Brühparametern, insbesondere von der Brühdauer, der Brühtemperatur, der Wassermenge etc. berechnet werden.

Die Steuereinrichtung bewirkt bevorzugt die Ausgabe einer von den berechneten Werten für die Restzeit abhängigen Nutzerinformation. Auf diese Weise wird der Nutzer über die Nutzerschnittstelle auf Basis der individuell für den Brühvorgang berechneten Restzeit informiert. Beispielsweise kann auf der Nutzerschnittstelle die Restzeit des Brühvorgangs in Sekunden ausgegeben werden.

Im Folgenden werden mehrere Ausführungsformen des Getränkezubereitungsautomaten und des Verfahrens beschrieben, wobei die einzelnen Ausführungsformen jeweils für den Getränkezubereitungsautomaten und das Verfahren gelten. Darüber hinaus sind die einzelnen Ausführungsformen untereinander kombinierbar.

Bei einer ersten Ausführungsform erfolgen die Berechnung des Werts für die Restzeit und die Ausgabe der Nutzerinformation zu Beginn des Brühvorgangs. Auf diese Weise wird der Nutzer direkt zu Beginn des Brühvorgangs entsprechend der berechneten Restzeit informiert. Beispielsweise kann zu Beginn des Brühvorgangs die verbleibende Restzeit auf der Nutzerschnittstelle angezeigt werden. Dies ermöglicht dem Nutzer, die verbleibende Restzeit des Brühvorgangs anderweitig zu nutzen.

Bei einer weiteren Ausführungsform ist die Steuereinrichtung dazu eingerichtet, den Wert für die Restzeit des Brühvorgangs als Funktion eines Werts für einen Leistungsparameter einer für den Brühvorgang anzusteuernden Komponente des Teeautomaten zu berechnen. Unter einem Leistungsparameter einer Komponente wird ein Parameter verstanden, der die Leistungsfähigkeit der Komponente kennzeichnet. Der Leistungsparameter kann sich auf die baulich bedingte grundsätzliche Leistungsfähigkeit der Komponente oder auch auf eine aktuelle Leistungsfähigkeit der Komponente beziehen.

Bei dem Leistungsparameter kann es sich beispielsweise um die Pumprate einer Kaltwasserpumpe handeln, mit der Wasser zum Aufheizen in den Boiler einer Heißwasserversorgung gepumpt werden kann. Weiterhin kann es sich bei dem Leistungsparameter um die Heizrate des Boilers einer Heißwasserversorgung handeln, gegebenenfalls abhängig von der aufzuheizenden Wassermenge. Weiterhin kann es sich bei dem Leistungsparameter um die Pumprate einer Warmwasserpumpe handeln, mit der das vom Boiler erhitzte Wasser zur Brühkammer gepumpt wird.

Durch die Berücksichtigung des Leistungsparameters von Komponenten des Getränkezubereitungsautomaten kann die Restzeit für den Brühvorgang zuverlässiger bestimmt werden. Beispielsweise kann durch Berücksichtigung der Heizrate des Boilers als Leistungsparameter sowie der Wassermenge und der Brühtemperatur als Brühparameter die Zeitdauer berechnet werden, die erforderlich ist, um die erforderliche Wassermenge auf die gewünschte Temperatur zu erhitzen.

Werte für die Leistungsparameter der einzelnen Komponenten können beispielsweise in einem Speicher des Getränkezubereitungsautomaten gespeichert sein.

Bei einer weiteren Ausführungsform weist der Getränkezubereitungsautomat eine Leistungsparameter-Messeinrichtung zur Bestimmung eines Werts für den Leistungsparameter der für den Brühvorgang anzusteuernden Komponente auf und die Steuereinrichtung ist dazu eingerichtet, den Wert für die Restzeit des Brühvorgangs als Funktion eines von der Leistungsparameter-Messeinrichtung gemessenen Wertes für den Leistungsparameter zu berechnen. Vorzugsweise erfolgt die Messung des Leistungsparameter-Werts durch die Leistungsparameter-Messeinrichtung zu Beginn des Brühvorgangs.

Die Leistungsparameter-Messeinrichtung kann beispielsweise dazu eingerichtet sein, die aktuelle Pumprate einer Wasserpumpe zu bestimmen. Auf diese Weise kann die aktuelle Leistung bestimmter Komponenten wie der Wasserpumpe bei der Berechnung der Restzeit berücksichtigt werden, so dass die Restzeit genauer berechnet werden kann.

Bei einer weiteren Ausführungsform ist die Steuereinrichtung dazu eingerichtet, den Wert für die Restzeit des Brühvorgangs als Funktion eines Werts für einen Zustandsparameter einer für den Brühvorgang anzusteuernden Komponente des Getränkezubereitungsautomaten zu berechnen. Unter einem Zustandsparameter einer Komponente wird ein Parameter für einen Zustand einer Komponente bzw. insbesondere von mit der Komponente verwendeten Medien verstanden.

Bei dem Zustandsparameter kann es sich beispielsweise um den Füllzustand eines Boilers der Heißwasserversorgung handeln oder um die Temperatur des in dem Boiler befindlichen Wassers. Indem der aktuelle Zustand der Komponenten des Getränkezubereitungsautomaten mitberücksichtigt wird, ist eine zuverlässigere Bestimmung der Restzeit möglich. Beispielsweise kann aus dem Füllzustand des Boilers bestimmt werden, welche Wassermenge zusätzlich in den Boiler gefüllt werden muss, um die für den Brühvorgang erforderliche Wassermenge zu erreichen. Auf diese Weise kann die Pumpzeit der Kaltwasserpumpe genauer berücksichtigt werden. Weiterhin kann mit dieser Information und der Information über die Temperatur des Wassers im Boiler sowie der Heizrate des Boilers genau berechnet werden, welche Zeit der Boiler benötigt, um die erforderliche Wassermenge auf die erforderliche Temperatur zu erwärmen. Dadurch kann insgesamt die Genauigkeit verbessert werden, mit der die Restzeit des Brühvorgangs berechnet wird.

Bei einer weiteren Ausführungsform weist der Getränkezubereitungsautomat eine Zustandsparameter-Messeinrichtung zur Bestimmung eines Wertes für den Zustandsparameter der für den Brühvorgang zu steuernden Komponente auf und die Steuereinrichtung ist dazu eingerichtet, einen Wert für die Restzeit des Brühvorgangs als Funktion eines von der Zustandsparameter-Messeinrichtung gemessenen Werts für den Zustandsparameter zu berechnen. Die Messung des Werts für den Zustandsparameter erfolgt vorzugsweise zu Beginn eines Brühvorgangs. Durch die Messung des Zustandsparameters kann die Genauigkeit bei der Berechnung der Restzeit erhöht werden.

Bei der Zustandsparameter-Messeinrichtung kann es sich beispielsweise um eine Temperatur-Messeinrichtung handeln, die die Temperatur des Wassers in einem Boiler der Heißwasserversorgung bestimmt. Weiterhin kann es sich auch um eine Füllstands-Messeinrichtung handeln, die den Füllstand des Boilers bestimmt.

Bei entsprechenden Ausführungsformen des Verfahrens wird zur Berechnung des einen Wertes für die Restzeit zunächst ein Wert für einen Leistungsparameter und/oder ein Wert für einen Zustandsparameter einer zur Durchführung des Brühvorgangs anzusteuernden Komponente des Getränkezubereitungsautomaten gemessen und der Wert für die Restzeit wird als Funktion des gemessenen Wertes für den Leistungsparameter und/oder des gemessenen Wertes für den Zustandsparameter berechnet.

Bei einer weiteren Ausführungsform ist die Steuereinrichtung dazu eingerichtet, als von dem berechneten Wert für die Restzeit abhängige Nutzerinformation die Ausgabe einer quantitativen Darstellung des Wertes für die Restzeit zu bewirken, insbesondere eine Zahlendarstellung des Wertes für die Restzeit. Auf diese Weise kann der Nutzer die Restzeit unmittelbar über die Nutzerschnittstelle ablesen. Alternativ zu einer Zahlendarstellung ist auch eine Balkendarstellung über eine Zahlenachse möglich. Bei einer weiteren Ausführungsform ist die Steuereinrichtung dazu eingerichtet, während des laufenden Brühvorgangs die Aktualisierung der Ausgabe des Wertes für die Restzeit des Brühvorgangs über die Nutzerschnittstelle zu bewirken. Bei einer entsprechenden Ausführungsform des Verfahrens wird die über die Nutzerschnittstelle ausgegebene, von der Restzeit abhängige Nutzerinformation während des laufenden Brühvorgangs aktualisiert. Auf diese Weise kann der Nutzer das Fortschreiten des Brühvorgangs über die Nutzerschnittstelle beobachten. Insbesondere kann er zu verschiedenen Zeiten während des Brühvorgangs durch einen Blick auf die Nutzerschnittstelle die verbleibende Restzeit bestimmen.

Für die Aktualisierung der Ausgabe des Wertes kann die Steuereinrichtung beispielsweise einen Zeitgeber umfassen, der von dem vorzugsweise zu Beginn des Brühvorgangs berechneten Wert für die Restzeit herunterzählt. Zusätzlich oder alternativ kann die Restzeit während des Brühvorgangs auch mehrfach neu berechnet werden und entsprechend über die Nutzerschnittstelle dargestellt werden. Auf diese Weise können unvorhergesehene Störungen oder Verzögerungen im Ablauf eines Brühvorgangs mitberücksichtigt werden.

Bei einer weiteren Ausführungsform ist die Steuereinrichtung dazu eingerichtet, den Getränkezubereitungsautomaten entsprechend des zuvor beschriebenen Verfahrens bzw. einer Ausführungsform davon zu steuern. Zu diesem Zweck sind vorzugsweise auf einem mit der Steuereinrichtung verbundenen Speicher Befehle gespeichert, deren Ausführung auf der Steuereinrichtung die Steuerung des Getränkezubereitungsautomaten entsprechend des Verfahrens oder einer Ausführungsform davon bewirkt.

Im Folgenden werden weitere Ausführungsformen 1 bis 9 des Getränkezubereitungsautomaten und Ausführungsformen 10 bis 12 des Verfahrens beschrieben. Diese können untereinander und mit den zuvor beschriebenen Ausführungsformen kombiniert werden:
1. Getränkezubereitungsautomat, eingerichtet zur automatischen Zubereitung von Getränken in einer Brühkammer, mit einer Nutzerschnittstelle zur Ausgabe einer Nutzerinformation und mit einer Steuereinrichtung, die dazu eingerichtet ist, die Durchführung eines Brühvorgangs zur automatischen Zubereitung eines Getränks entsprechend für den Brühvorgang eingestellter Brühparameter zu steuern, dadurch gekennzeichnet, dass die Steuereinrichtung dazu eingerichtet ist, einen Wert für die Restzeit des Brühvorgangs abhängig von mindestens einem der für den Brühvorgang eingestellten Brühparameter zu berechnen und die Ausgabe einer von dem berechneten Wert für die Restzeit abhängigen Nutzerinformation über die Nutzerschnittstelle zu bewirken.
2. Getränkezubereitungsautomat nach Ausführungsform 1, dadurch gekennzeichnet, dass die Berechnung des Werts für die Restzeit und die Ausgabe der Nutzerinformation zu Beginn des Brühvorgangs erfolgt.
3. Getränkezubereitungsautomat nach Ausführungsform 1 oder 2, dadurch gekennzeichnet, dass die Steuereinrichtung dazu eingerichtet ist, den Wert für die Restzeit des Brühvorgangs als Funktion eines Werts für einen Leistungsparameter einer für den Brühvorgang anzusteuernden Komponente des Getränkezubereitungsautomaten zu berechnen.
4. Getränkezubereitungsautomat nach Ausführungsform 3, dadurch gekennzeichnet, dass der Getränkeautomat eine Leistungsparameter-Messeinrichtung zur Bestimmung eines Werts für den Leistungsparameter der für den Brühvorgang anzusteuernden Komponente aufweist und die Steuereinrichtung dazu eingerichtet ist, einen Wert für die Restzeit des Brühvorgangs als Funktion eines von der Leistungsparameter-Messeinrichtung gemessenen Werts für den Leistungsparameter zu berechnen.
5. Getränkezubereitungsautomat nach einer der Ausführungsformen 1 bis 4, dadurch gekennzeichnet, dass die Steuereinrichtung dazu eingerichtet ist, den Wert für die Restzeit des Brühvorgangs als Funktion eines Werts für einen Zustandsparameter einer für den Brühvorgang anzusteuernden Komponente des Getränkezubereitungsautomaten zu berechnen.
6. Getränkezubereitungsautomat nach Ausführungsform 5, dadurch gekennzeichnet, dass der Getränkezubereitungsautomat eine Zustandsparameter-Messeinrichtung zur Bestimmung eines Werts für den Zustandsparameter der für den Brühvorgang anzusteuernden Komponente aufweist und die Steuereinrichtung dazu eingerichtet ist, einen Wert für die Restzeit des Brühvorgangs als Funktion eines von der Zustandsparameter-Messeinrichtung gemessenen Werts für den Zustandsparameter zu berechnen.
7. Getränkezubereitungsautomat nach einer der Ausführungsformen 1 bis 6, dadurch gekennzeichnet, dass die Steuereinrichtung dazu eingerichtet ist, als von dem berechneten Wert für die Restzeit abhängige Nutzerinformation die Ausgabe einer quantitativen Darstellung des Werts für die Restzeit zu bewirken, insbesondere eine Zahlendarstellung des Werts für die Restzeit.
8. Getränkezubereitungsautomat nach einer der Ausführungsformen 1 bis 7, dadurch gekennzeichnet, dass die Steuereinrichtung dazu eingerichtet ist, während des laufenden Brühvorgangs die Aktualisierung der Ausgabe des Werts für die Restzeit des Brühvorgangs über die Nutzerschnittstelle zu bewirken.
9. Getränkezubereitungsautomat nach einer der Ausführungsformen 1 bis 8, dadurch gekennzeichnet, dass die Steuereinrichtung dazu eingerichtet ist, den Getränkezubereitungsautomaten entsprechend eines Verfahrens nach einer der Ausführungsformen 10 bis 12 zu steuern.
10. Verfahren zum Betrieb eines Getränkezubereitungsautomaten, insbesondere eines Getränkezubereitungsautomaten nach einer der Ausführungsformen 1 bis 9, bei dem ein Brühvorgang durchgeführt wird und bei dem zu Beginn des Brühvorgangs abhängig von einem für den Brühvorgang eingestellten Brühparameter ein Wert für die Restzeit des Brühvorgangs berechnet und eine von dem berechneten Wert für die Restzeit abhängige Nutzerinformation über eine Nutzerschnittstelle des Getränkezubereitungsautomaten ausgegeben wird.
11. Verfahren nach Ausführungsform 10, bei dem zur Berechnung des einen Werts für die Restzeit zunächst ein Wert für einen Leistungsparameter und/oder ein Werts für einen Zustandsparameter einer zur Durchführung des Brühvorgangs anzusteuernden Komponente des Getränkezubereitungsautomaten gemessen wird und der Wert für die Restzeit als Funktion des gemessenen Werts für den Leistungsparameter und/oder des gemessenen Werts für den Zustandsparameter berechnet wird.
12. Verfahren nach Ausführungsform 10 oder 11, bei dem die über die Nutzerschnittstelle ausgegebene, von der Restzeit abhängige Nutzerinformation während des laufenden Brühvorgangs aktualisiert wird.

Weitere Merkmale und Vorteile des Getränkezubereitungsautomaten und des Verfahrens können der nachfolgenden Beschreibung verschiedener Ausführungsbeispiele entnommen werden, wobei auf die beigefügte Zeichnung Bezug genommen wird.

In der Zeichnung zeigen
- Figs. 1a-b: ein Ausführungsbeispiel des erfindungsgemäßen Getränkezubereitungsautomaten,
- Fig. 2: eine schematische Darstellung der Heißwasserversorgung des Getränkezubereitungsautomaten aus Fig. 1a-b,
- Figs. 3 - 5: Diagramme mit Beispielen zur Berechnung eines Werts für die Restzeit eines Brühvorgangs und
- Figs. 6 - 7: Ausführungsbeispiele einer auf einer Nutzerschnittstelle des Getränkezubereitungsautomaten aus Fig. 1 ausgegebenen Nutzerinformation.

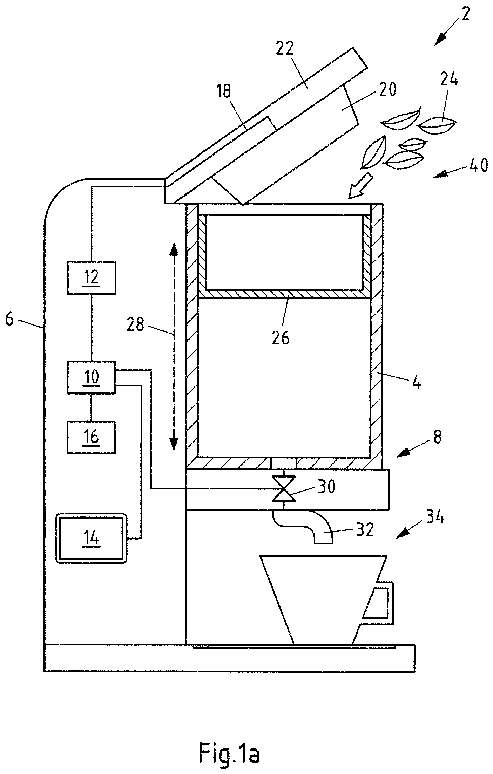

Die Figuren 1a-b zeigen ein Ausführungsbeispiel eines Getränkezubereitungsautomaten 2 am Beispiel eines Teeautomaten. Der Teeautomat 2 ist zur automatischen Zubereitung von Teegetränken in einer Brühkammer 4 eingerichtet. Zu diesem Zweck weist der Teeautomat ein Gehäuse 6 mit einer Brühkammeraufnahme 8 auf, in die die Brühkammer 4 einsetzbar ist. Der Teeautomat 2 ist also mit einer entnehmbaren Brühkammer 4 ausgebildet. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat eine Steuereinrichtung 10, eine Heißwasserversorgung 12 und eine Nutzerschnittstelle 14 in Form eines Touchscreens auf.

Die Steuereinrichtung 10 ist zur Steuerung des Teeautomaten eingerichtet. Zu diesem Zweck ist auf einem mit der Steuereinrichtung 10 verbundenen digitalen Speicher 16 ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

Um mit dem Teeautomaten 2 ein Teegetränk zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, in einen Siebeinsatz 26 geben, der in die Brühkammer 4 eingesetzt wird. Anschließend wird der Deckel 22 wieder geschlossen und der Nutzer kann durch eine entsprechende Eingabe über die Nutzerschnittstelle 14 einen Brühvorgang starten.

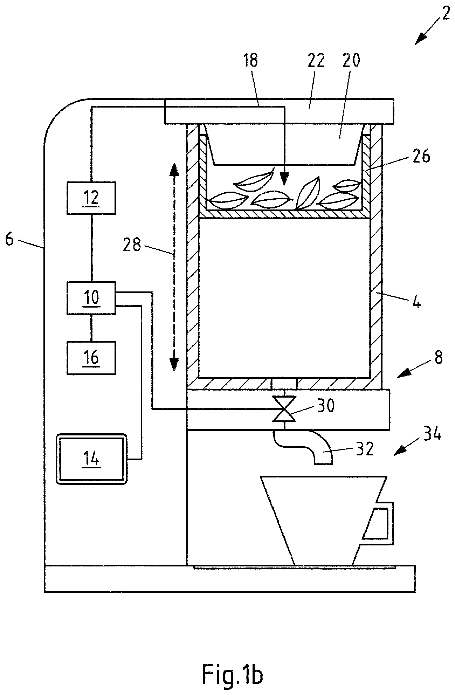

Auf den Befehl des Nutzers steuert die Steuereinrichtung 10 dann die Heißwasserversorgung 12 an, so dass eine vorgegebene Menge Wasser mit einer vorgegebenen Temperatur in die Brühkammer 4 eingeleitet wird (vgl. Fig. 1b). Weiterhin wird der Siebeinsatz 26 durch eine von der Steuereinrichtung 10 angesteuerte, beispielsweise magnetisch mit dem Siebeinsatz 26 gekoppelte Verfahreinrichtung 28 in die Brühkammer hinabgefahren, so dass die Teeblätter 24 dort mit dem eingeleiteten heißen Wasser in Kontakt kommen.

Nach Ablauf einer vorgegebenen Brühdauer steuert die Steuereinrichtung 10 die Verfahreinrichtung 28 an, so dass diese den Siebeinsatz 26 und damit die Teeblätter 24 wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden.

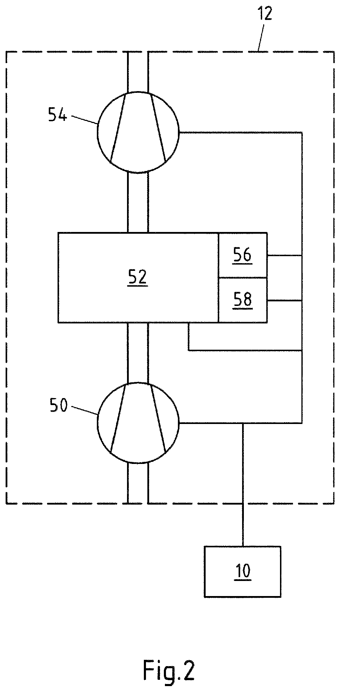

Figur 2 zeigt eine schematische Darstellung der Heißwasserversorgung 12 des Teeautomaten 2. Die Heißwasserversorgung 12 umfasst eine Kaltwasserpumpe 50, einen Boiler 52 und eine Warmwasserpumpe 54. Mit der Kaltwasserpumpe 50 kann aus einem Wasserreservoir oder über eine externe Kaltwasserzuleitung (nicht dargestellt) kaltes Wasser in den Boiler 52 gepumpt werden. Der Boiler 52 weist ein Heizelement auf, um das darin enthaltene Wasser auf eine vorgegebene Temperatur zu erhitzen. Das erhitzte bzw. erwärmte Wasser kann dann mit der Warmwasserpumpe 54 vom Boiler über die in Figur 1a dargestellte Zuleitung 18 zum Verteilerkopf 20 in die Brühkammer 4 gepumpt werden.

Die einzelnen Komponenten der Heißwassereinrichtung 12 sind wie in Figur 2 dargestellt mit der Steuereinrichtung 10 verbunden und können von dieser gesteuert werden.

Die Steuereinrichtung 10 ist dazu eingerichtet, Brühvorgänge entsprechend vorgegebener Brühparameter, beispielsweise für die Brühtemperatur, die Brühdauer oder die Wassermenge, zu bewirken. Die einzelnen Brühparameter können beispielsweise vom Nutzer über die Nutzerschnittstelle 14 vorgegeben oder ausgewählt werden. Alternativ kann die Steuereinrichtung 10 dazu eingerichtet sein, die Brühparameter zumindest teilweise automatisch zu bestimmen, beispielsweise abhängig von der in dem Teeautomaten 2 eingefüllten Teesorte oder Teemenge.

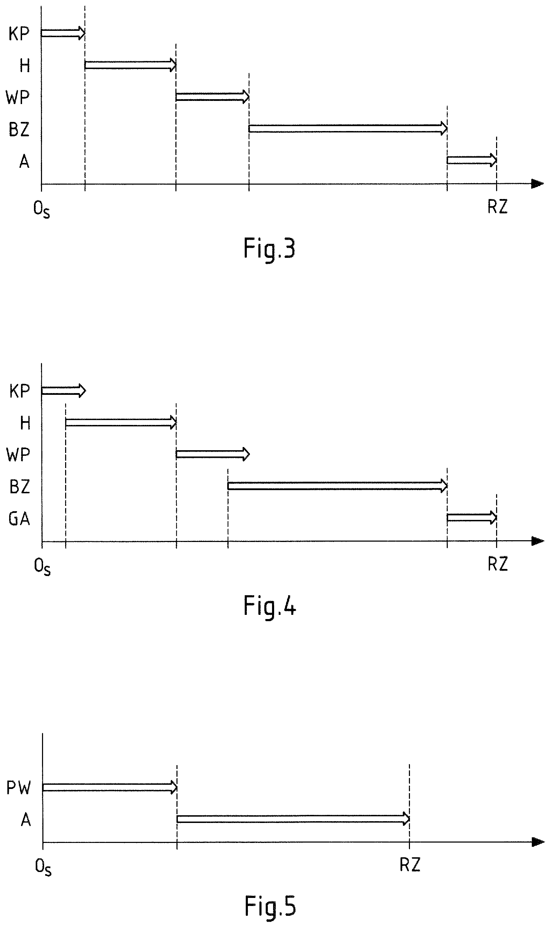

Die Steuereinrichtung 10 ist weiterhin dazu eingerichtet, einen Wert für die Restzeit des Brühvorgangs abhängig von mindestens einem der für den Brühvorgang eingestellten Brühparameter zu berechnen. Eine solche Berechnung wird nachfolgend anhand des in Figur 3 dargestellten Beispiels erläutert.

Figur 3 zeigt ein Zeitdiagramm, in denen verschiedene Phasen eines Brühvorgangs durch Pfeile eingezeichnet sind. Die Steuereinrichtung 10 ist dazu eingerichtet, die Dauer der einzelnen Phasen eines Brühvorgangs anhand der vorgegebenen Brühparameter und ggf. weiterer Parameter des Teeautomaten, insbesondere anhand von Leistungsparametern und/oder Zustandsparametern der einzelnen Komponenten des Teeautomaten zu berechnen.

Bei dem in Fig. 3 gezeigten beispielhaften Brühvorgang ist zunächst dem Boiler 52 die für den Brühvorgang erforderliche Menge an kaltem Wasser zuzuführen (Phase "KP" in Fig. 3). Zur Berechnung der Dauer dieser Phase bestimmt die Steuereinrichtung zunächst die von der Kaltwasserpumpe 50 zu fördernde Wassermenge V_{KP}, indem sie von der als Brühparameter vorgegebenen Wassermenge V die im Boiler 52 bereits enthaltene Wassermenge V₀ abzieht. Die im Boiler 52 enthaltene Wassermenge V₀ kann beispielweise über eine am Boiler 52 vorgesehene Füllstands-Messeinrichtung 56 gemessen werden.

Aus der berechneten, von der Kaltwasserpumpe 50 zu pumpenden Wassermenge V_{KP} und der Pumprate der Kaltwasserpumpe 50, die beispielsweise aus dem Speicher 16 ausgelesen oder mittels einer an der Kaltwasserpumpe 50 vorgesehenen Pumpraten-Messeinrichtung (nicht dargestellt) bestimmt werden kann, bestimmt die Steuereinrichtung 10 die Zeitdauer für die Phase "KP" des Brühvorgangs.

Nach Phase "KP" folgt die Heizphase (Phase "H"), in der die erforderliche Wassermenge im Boiler 52 auf die erforderliche Brühtemperatur erhitzt wird. Die Steuereinrichtung berechnet die Zeitdauer für diese Phase abhängig von der als Brühparameter vorgegebenen Brühtemperatur und Wassermenge, der aus dem Speicher 16 ausgelesenen oder mittels einer Heizraten-Messeinrichtung (nicht dargestellt) gemessenen Heizrate des Boilers 52 und ggf. der mit einer am Boiler 52 vorgesehenen Temperatur-Messeinrichtung 58 ermittelten Temperatur des im Boiler 52 befindlichen Wassers.

Nach Phase "H" folgt die zweite Pumpphase (Phase "WP"), in der das erwärmte Wasser mit der Warmwasserpumpe 54 in die Brühkammer transportiert wird. Die Steuereinrichtung berechnet die Zeitdauer für diese Phase abhängig von der als Brühparameter vorgegebenen Wassermenge und der aus dem Speicher 16 ausgelesenen oder mittels einer Pumpraten-Messeinrichtung (nicht dargestellt) gemessenen Pumprate der Warmewasserpumpe.

Nach Phase "WP" folgt das eigentliche Aufbrühen, dessen Zeitdauer durch die als Brühparameter vorgegebenen Brühzeit BZ vorgegeben wird.

Abschließend kann bei automatischer Ausgabe des Teegetränks noch die Dauer für die Ausgabe des Teegetränks in eine Teeaufnahme wie eine Kanne oder Tasse bestimmt werden (Phase "A").

Die Steuereinrichtung ist dazu eingerichtet, die zuvor beschriebenen Berechnungen zu Beginn eines Brühvorgangs durchzuführen. Die Restzeit RZ des Brühvorgangs ergibt sich dann aus der Summe der für die einzelnen Phasen berechneten Zeitdauern.

Die Steuereinrichtung 10 kann bei der Berechnung der Restzeit RZ auch berücksichtigen, wenn mehrere Phasen des Brühvorgangs zumindest abschnittsweise überlappen. Dies ist exemplarisch in Fig. 4 dargestellt. Fig. 4 entspricht im Wesentlichen der Fig. 3, wobei jedoch die Phase "H" bereits vor dem Ende der Phase "KP" beginnt, da der Boiler bereits vor vollständiger Befüllung mit dem Heizvorgang beginnt. Weiterhin beginnt die Phase "BZ" bereits vor Ende der Phase "WP", da der Siebeinsatz 26 bereits in die Brühkammer hinabgefahren wird, bevor das Wasservolumen vollständig in die Brühkammer eingeleitet wurde.

Die Steuereinrichtung 10 kann auch dazu eingerichtet sein, komplexere Brühprogramme zur Berechnung der Restzeit zu berücksichtigen. Dies ist exemplarisch in Fig. 5 dargestellt. Wird beispielsweise zur Zubereitung eines grünen Tees ein zweifacher Aufguss durchgeführt, wobei zunächst ein Pre-Wash-Aufguss (PW) und anschließend der eigentliche Aufguss (A) zur Zubereitung des Teegetränkes erfolgt, ergibt sich die Restzeit RZ aus der Summe der Zeitdauern für beiden einzelnen Aufgüsse PW und A, wobei die Zeitdauern der einzelnen Aufgüsse PW und A beispielsweise analog zu Fig. 3 oder 4 berechnet werden können.

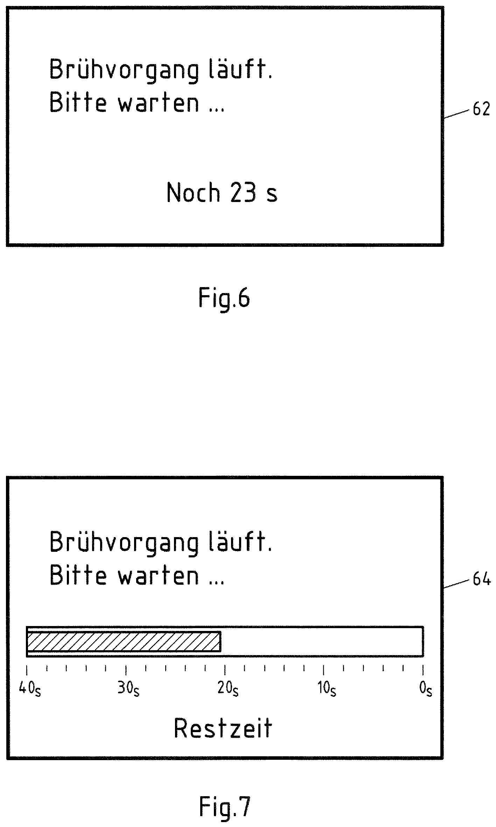

Die Steuereinrichtung 10 ist weiterhin dazu eingerichtet, die Ausgabe einer von dem berechneten Wert für die Restzeit RZ abhängigen Nutzerinformation über die Nutzerschnittstelle zu bewirken. Die Figuren 6 und 7 zeigen zwei Beispiele für entsprechende Nutzerinformationen.

Figur 6 zeigt eine erste Nutzerinformation 62 auf dem Touchscreen 14 des Teeautomaten 2 aus Figur 1a. Die Nutzerinformation 62 enthält eine Darstellung der von der Steuereinrichtung 10 berechneten Restzeit RZ als Zahlenwert in Sekunden. Auf diese Weise kann der Nutzer die tatsächliche Restzeit bis zum Ende des Brühvorgangs am Touchscreen 14 ablesen und dann ggf. anderweitig nutzen. Vorzugsweise wird die Nutzerinformation 62 zu Beginn des Brühvorgangs angezeigt und während des laufenden Brühvorgangs kontinuierlich aktualisiert. Zu diesem Zweck weist die Steuereinrichtung 10 vorzugsweise einen Zeitgeber auf, der von der zu Beginn des Brühvorgangs berechneten Restzeit RZ abwärts zählt. Zusätzlich oder alternativ kann die Restzeit RZ während des Brühvorgangs auch mehrfach neu berechnet werden, insbesondere entsprechend der zuvor anhand der Figuren 3 bis 5 beschriebenen Verfahren, so dass etwaige unvorhergesehene Ereignisse und Verzögerungen beim Brühvorgang bei der Berechnung der Restzeit mitberücksichtigt werden können.

Figur 7 zeigt eine alternative Nutzerinformation 64, bei der die Restzeit RZ nicht als Zahlenwert, sondern in Form eines Fortschrittbalkens mit einer Zeitskala dargestellt ist, wobei der Nutzer anhand der Position des rechten Endes des Fortschrittbalkens und der Zeitskala die verbleibende Restzeit RZ unmittelbar ablesen kann.

Der Teeautomat 2 und die zuvor beschriebenen Verfahren ermöglichen es dem Nutzer daher, die tatsächliche Restzeit RZ für einen Brühvorgang abzulesen, die abhängig von den verwendeten Brühparametern des Brühvorgangs berechnet wurde. Dadurch wird der Bedienkomfort des Teeautomaten 2 erhöht.

Vergleichbare Vorteile lassen sich in entsprechender Weise auch für andere Getränkezubereitungsautomaten erreichen, beispielsweise für einen Kaffeeautomaten, der zur automatischen Zubereitung von Kaffeegetränken eingerichtet ist.

## Patentansprüche

1. Getränkezubereitungsautomat (2), eingerichtet zur automatischen Zubereitung von Getränken in einer Brühkammer (4),
- mit einer Nutzerschnittstelle (14) zur Ausgabe einer Nutzerinformation (62, 64) und
- mit einer Steuereinrichtung (10), die dazu eingerichtet ist, die Durchführung eines Brühvorgangs zur automatischen Zubereitung eines Getränks entsprechend für den Brühvorgang eingestellter Brühparameter zu steuern,
**dadurch gekennzeichnet,**
- **dass** die Steuereinrichtung (10) dazu eingerichtet ist, einen Wert für die Restzeit (RZ) des Brühvorgangs abhängig von mindestens einem der für den Brühvorgang eingestellten Brühparameter zu berechnen und die Ausgabe einer von dem berechneten Wert für die Restzeit (RZ) abhängigen Nutzerinformation (62, 64) über die Nutzerschnittstelle (14) zu bewirken, und
- **dass** die Steuereinrichtung (10) dazu eingerichtet ist, den Wert für die Restzeit (RZ) des Brühvorgangs als Funktion eines Werts für einen Leistungsparameter einer für den Brühvorgang anzusteuernden Komponente des Getränkezubereitungsautomaten (2) und/oder als Funktion eines Werts für einen Zustandsparameter einer für den Brühvorgang anzusteuernden Komponente des Getränkezubereitungsautomaten (2) zu berechnen.

2. Getränkezubereitungsautomat nach Anspruch 1,
**dadurch gekennzeichnet, dass** die Berechnung des Werts für die Restzeit (RZ) und die Ausgabe der Nutzerinformation (62, 64) zu Beginn des Brühvorgangs erfolgt.

3. Getränkezubereitungsautomat nach Anspruch 1 oder 2,
**dadurch gekennzeichnet, dass** der Getränkeautomat (2) eine Leistungsparameter-Messeinrichtung zur Bestimmung eines Werts für den Leistungsparameter der für den Brühvorgang anzusteuernden Komponente aufweist und die Steuereinrichtung (10) dazu eingerichtet ist, einen Wert für die Restzeit (RZ) des Brühvorgangs als Funktion eines von der Leistungsparameter-Messeinrichtung gemessenen Werts für den Leistungsparameter zu berechnen.

4. Getränkezubereitungsautomat nach einem der Ansprüche 1 bis 3,
**dadurch gekennzeichnet, dass** der Getränkezubereitungsautomat (2) eine Zustandsparameter-Messeinrichtung (56, 58) zur Bestimmung eines Werts für den Zustandsparameter der für den Brühvorgang anzusteuernden Komponente aufweist und die Steuereinrichtung (10) dazu eingerichtet ist, einen Wert für die Restzeit (RZ) des Brühvorgangs als Funktion eines von der Zustandsparameter-Messeinrichtung (56, 58) gemessenen Werts für den Zustandsparameter zu berechnen.

5. Getränkezubereitungsautomat nach einem der Ansprüche 1 bis 4,
**dadurch gekennzeichnet, dass** die Steuereinrichtung (10) dazu eingerichtet ist, als von dem berechneten Wert für die Restzeit (RZ) abhängige Nutzerinformation (62, 64) die Ausgabe einer quantitativen Darstellung des Werts für die Restzeit (RZ) zu bewirken, insbesondere eine Zahlendarstellung des Werts für die Restzeit (RZ).

6. Getränkezubereitungsautomat nach einem der Ansprüche 1 bis 5,
**dadurch gekennzeichnet, dass** die Steuereinrichtung (10) dazu eingerichtet ist, während des laufenden Brühvorgangs die Aktualisierung der Ausgabe des Werts für die Restzeit (RZ) des Brühvorgangs über die Nutzerschnittstelle (14) zu bewirken.

7. Getränkezubereitungsautomat nach einem der Ansprüche 1 bis 6,
**dadurch gekennzeichnet, dass** die Steuereinrichtung (10) dazu eingerichtet ist, den Getränkezubereitungsautomaten (2) entsprechend eines Verfahrens nach Anspruch 8 oder 9 zu steuern.

8. Verfahren zum Betrieb eines Getränkezubereitungsautomaten (2), insbesondere eines Getränkezubereitungsautomaten nach einem der Ansprüche 1 bis 7,
- bei dem ein Brühvorgang durchgeführt wird,
**dadurch gekennzeichnet,**
- **dass** zu Beginn des Brühvorgangs abhängig von einem für den Brühvorgang eingestellten Brühparameter ein Wert für die Restzeit (RZ) des Brühvorgangs berechnet und eine von dem berechneten Wert für die Restzeit (RZ) abhängige Nutzerinformation (62, 64) über eine Nutzerschnittstelle (14) des Getränkezubereitungsautomaten (2) ausgegeben wird, und
- **dass** zur Berechnung des einen Werts für die Restzeit (RZ) zunächst ein Wert für einen Leistungsparameter und/oder ein Wert für einen Zustandsparameter einer zur Durchführung des Brühvorgangs anzusteuernden Komponente des Getränkezubereitungsautomaten (2) gemessen wird und der Wert für die Restzeit (RZ) als Funktion des gemessenen Werts für den Leistungsparameter und/oder des gemessenen Werts für den Zustandsparameter berechnet wird.

9. Verfahren nach Anspruch 8,
- bei dem die über die Nutzerschnittstelle (14) ausgegebene, von der Restzeit (RZ) abhängige Nutzerinformation (62, 64) während des laufenden Brühvorgangs aktualisiert wird.

## Claims

1. Automatic beverage preparation machine (2) configured to automatically prepare beverages in a brewing chamber (4),
- having a user interface (14) for outputting a piece of user information (62, 64) and
- having a control device (10) which is configured to control the execution of a brewing operation for automatically preparing a beverage according to brewing parameters which are set for the brewing operation,
**characterised**
- **in that** the control device (10) is configured to calculate a value for the remaining time (RZ) of the brewing operation as a function of at least one of the brewing parameters set for the brewing operation and to cause outputting a piece of user information (62, 64), which piece of user information is a function of the calculated value for the remaining time (RZ), via the user interface (14), and
- **in that** the control device (10) is configured to calculate the value for the remaining time (RZ) of the brewing operation as a function of a value for a power parameter of a component of the automatic beverage preparation machine (2), which component is to be controlled for the brewing operation, and/or as a function of a value for a state parameter of a component of the automatic beverage preparation machine (2), which component is to be controlled for the brewing operation.

2. Automatic beverage preparation machine according to claim 1,
**characterised in that** the calculation of the value for the remaining time (RZ) and outputting the piece of user information (62, 64) takes place at the beginning of the brewing operation.

3. Automatic beverage preparation machine according to claim 1 or 2,
**characterised in that** the automatic beverage preparation machine (2) has a power parameter measurement device for determining a value for the power parameter of the component which is to be controlled for the brewing operation and the control device (10) is configured to calculate a value for the remaining time (RZ) of the brewing operation as a function of a value for the power parameter measured by the power parameter measurement device.

4. Automatic beverage preparation machine according to any one of claims 1 to 3,
**characterised in that** the automatic beverage preparation machine (2) has a state parameter measurement device (56, 58) for determining a value for the state parameter of the component which is to be controlled for the brewing operation and the control device (10) is configured to calculate a value for the remaining time (RZ) of the brewing operation as a function of a value for the state parameter measured by the state parameter measurement device (56, 58).

5. Automatic beverage preparation machine according to any one of claims 1 to 4,
**characterised in that** the control device (10) is configured to cause outputting a quantitative representation of the value for the remaining time (RZ) as the piece of user information (62, 64) being a function of the calculated value for the remaining time (RZ), in particular a numerical representation of the value for the remaining time (RZ).

6. Automatic beverage preparation machine according to any one of claims 1 to 5,
**characterised in that** the control device (10) is configured to cause the outputting of the value for the remaining time (RZ) of the brewing operation via the user interface (14) to update during the ongoing brewing operation.

7. Automatic beverage preparation machine according to any one of claims 1 to 6,
**characterised in that** the control device (10) is configured to control the automatic beverage preparation machine (2) according to a method according to claim 8 or 9.

8. Method for operating an automatic beverage preparation machine (2), in particular an automatic beverage preparation machine according to any one of claims 1 to 7,
- in which a brewing operation is conducted,
**characterised**
- **in that**, at the beginning of the brewing operation, a value is calculated for the remaining time (RZ) of the brewing operation as a function of a brewing parameter set for the brewing operation and a piece of user information (62, 64), which is a function of the calculated value for the remaining time (RZ), is output via a user interface (14) of the automatic beverage preparation machine (2), and
- **in that**, in order to calculate a value for the remaining time (RZ), initially, a value for a power parameter and/or a value for a state parameter of a component of the automatic beverage preparation machine (2), which component is to be controlled for conducting the brewing operation, is measured and the value for the remaining time (RZ) is calculated as a function of the measured value for the power parameter and/or of the measured value for the state parameter.

9. Method according to claim 8,
- wherein the piece of user information (62, 64), which is output via the user interface (14) and which is a function of the remaining time (RZ), is updated during the ongoing brewing operation.

## Revendications

1. Automate pour la préparation de boissons (2) conçu pour la préparation automatisée de boissons dans une chambre d'infusion (4),
- avec une interface utilisateur (14) pour délivrer une information utilisateur (62, 64) et
- avec un dispositif de commande (10) conçu pour commander l'exécution d'un processus d'infusion pour la préparation automatisée d'une boisson conformément à des paramètres d'infusion réglés pour le processus d'infusion,
**caractérisé**
- **en ce que** le dispositif de commande (10) est conçu pour calculer une valeur pour la durée restante (RZ) du processus d'infusion en fonction d'au moins un des paramètres d'infusion réglés pour le processus d'infusion et pour entraîner la délivrance par l'interface utilisateur (14) d'une information utilisateur (62, 64) dépendante de la valeur calculée pour la durée restante (RZ), et
- **en ce que** le dispositif de commande (10) est conçu pour calculer la valeur pour la durée restante (RZ) du processus d'infusion en fonction d'une valeur pour un paramètre de performance d'un composant à commander de l'automate pour la préparation de boissons (2) pour le processus d'infusion et/ou en fonction d'une valeur pour un paramètre d'état d'un composant à commander de l'automate pour la préparation de boissons (2) pour le processus d'infusion.

2. Automate pour la préparation de boissons selon la revendication 1, **caractérisé en ce que** le calcul de la valeur pour la durée restante (RZ) et la délivrance de l'information utilisateur (62, 64) ont lieu au début du processus d'infusion.

3. Automate pour la préparation de boissons selon la revendication 1 ou 2, **caractérisé en ce que** le distributeur de boissons (2) présente un dispositif de mesure de paramètre de performance pour déterminer une valeur pour le paramètre de performance du composant à commander pour le processus d'infusion et le dispositif de commande (10) est conçu pour calculer une valeur pour la durée restante (RZ) du processus d'infusion en fonction d'une valeur mesurée par le dispositif de mesure de paramètre de performance pour le paramètre de performance.

4. Automate pour la préparation de boissons selon l'une des revendications 1 à 3, **caractérisé en ce que** l'automate pour la préparation de boissons (2) présente un dispositif de mesure de paramètre d'état (56, 58) pour déterminer une valeur pour le paramètre d'état du composant à commander pour le processus d'infusion et le dispositif de commande (10) est conçu pour calculer une valeur pour la durée restante (RZ) du processus d'infusion en fonction d'une valeur mesurée par le dispositif de mesure de paramètre d'état (56, 58) pour le paramètre d'état.

5. Automate pour la préparation de boissons selon l'une des revendications 1 à 4, **caractérisé en ce que** le dispositif de commande (10) est conçu pour entraîner, en tant qu'information utilisateur (62, 64) dépendante de la valeur calculée pour la durée restante (RZ), la délivrance d'une représentation quantitative de la valeur pour la durée restante (RZ), en particulier une représentation sous forme de chiffres de la valeur pour la durée restante (RZ).

6. Automate pour la préparation de boissons selon l'une des revendications 1 à 5, **caractérisé en ce que** le dispositif de commande (10) est conçu pour entraîner, pendant le processus d'infusion en cours, la mise à jour de la délivrance de la valeur pour la durée restante (RZ) du processus d'infusion par l'interface utilisateur (14).

7. Automate pour la préparation de boissons selon l'une des revendications 1 à 6, **caractérisé en ce que** le dispositif de commande (10) est conçu pour commander l'automate pour la préparation de boissons (2) conformément à un procédé selon l'une des revendications 8 ou 9.

8. Procédé de fonctionnement d'automate pour la préparation de boissons (2), en particulier d'un automate pour la préparation de boissons selon l'une des revendications 1 à 7,
- dans lequel un processus d'infusion est exécuté,
**caractérisé**
- **en ce qu'**au début du processus d'infusion, une valeur pour la durée restante (RZ) du processus d'infusion est calculée en fonction d'un paramètre d'infusion réglé pour le processus d'infusion et une information utilisateur (62, 64) dépendante de la valeur calculée pour la durée restante (RZ) est délivrée par une interface utilisateur (14) de l'automate pour la préparation de boissons (2), et
- **en ce que**, pour le calcul de la valeur pour la durée restante (RZ), l'on mesure d'abord une valeur pour un paramètre de performance et/ou une valeur pour un paramètre d'état d'un composant de l'automate pour la préparation de boissons (2) à commander pour effectuer le processus d'infusion et l'on calcule la valeur pour la durée restante (RZ) en fonction de la valeur mesurée pour le paramètre de performance et/ou de la valeur mesurée pour le paramètre d'état.

9. Procédé selon la revendication 8,
d ans lequel l'information utilisateur (62, 64) délivrée par l'interface utilisateur (14) et dépendante de la durée restante (RZ) est mise à jour pendant le processus d'infusion en cours.
